## Europäisches Patentamt

## European Patent Office

## Office européen des brevets

(19)

(11) Numéro de publication: **0 167 414**

**B1**

(12)

# FASCICULE DE BREVET EUROPÉEN

(45) Date de publication du fascicule du brevet:
**12.10.88**

(51) Int. Cl.⁴: **C 22 B 41/00**, C 22 B 3/00, C 01 G 17/00

(21) Numéro de dépôt: **85400248.2**

(22) Date de dépôt: **17.08.81**

(54) **Procédé d'extraction sélective du germanium.**

(30) Priorité: **15.08.80 US 178583**

(43) Date de publication de la demande:
**08.01.86 Bulletin 86/2**

(45) Mention de la délivrance du brevet:
**12.10.88 Bulletin 88/41**

(84) Etats contractants désignés:
**AT BE CH DE FR GB IT LI LU NL SE**

(56) Documents cité:
**BE-A-881 273**
**FR-A-2 106 033**
**FR-A-2 317 366**
**US-A-3 637 711**

**HYDROMETALLURGY, vol. 5, no. 2,3, février 1980, pages 149-160, Elsevier Scientific Publishing Co., Amsterdam, NL; G. COTE et al.: "Liquid-liquid extraction of germanium with oxine derivatives" J. INORG. NUCL. CHEM., vol. 41, no. 9, 1979, pages 1353-1363, Pergamon Press Ltd, GB; B. MARCHON et al.: "Some typical behaviours of the bêta-dodecenyl 8-hydroxyquinoline through its reactions with germanium(IV)" CHEMICAL ABSTRACTS, vol. 89, no. 12, 18 septembre 1978, no. 95718q, page 359, Columbus, Ohio, US; L.V. KOVTUN et al.: "Extraction of germanium(IV) by 5,7-dibromo-8-hydroxyquinoline"**

(73) Titulaire: **SOCIETE MINIERE ET METALLURGIQUE DE PENARROYA Société anonyme dite:, Tour Maine- Montparnasse 33, avenue du Maine, F-75755 Paris Cédex 15 (FR)**

(72) Inventeur: **Rouillard épouse Bauer, Denise, 8 bis, allée de la Fontaine, F-93340 Le Raincy (FR)**
Inventeur: **Cote, Gérard, 3, impasse sous la Tour, F-92160 Antony (FR)**
Inventeur: **Fossi, Paolo, 52, avenue de Cressac, F-78310 Elancourt (FR)**
Inventeur: **Marchon, Bruno, 42, rue de Berri, F-75008 Paris (FR)**

(74) Mandataire: **Ricalens, François, CABINET REGIMBEAU 26, avenue Kléber, F-75116 Paris (FR)**

(56) Documents cité: (suite)
**Manuel Pratique de Chromatographie en Phase liquide, R. Rosset, M. Caude, A. Jardy**

# 0 167 414

## Description

La présente invention a pour objet l'extraction de métal a partir de solutions aqueuses acides. Elle concerne plus particulièrement un procédé d' extraction sélective du germanium à partir des solutions acides contenant également au moins un des métaux choisis parmi le cadmium, le zinc, le cobalt, le fer, l'arsenic, le nickel, l'aluminium, le gallium et le cuivre.

La séparation du germanium des solutions acides a fait l'objet d'une grande attention en raison des ses implications économiques, en particulier dans le domaine de la production du zinc. L'électrolyse du zinc ne peut être réalisée avec un bon rendement que lorsque le germanium a été completement éliminé de l'électrolyte. Cette élimination est par conséquent une opération préliminaire à la récupération du zinc métallique des solutions en contenant. En outre, la récupération du germanium de telles solutions constitue la principale source de ce métal dont les applications sont essentiellement dans le domaine de l'électronique, de l'optique infrarouge, des fibres optiques, de la détection des particules ionisées et de la chimie des polymères.

Pour des raisons d'ordre économique, la lixiviation des minerais une fois grillés est réalisée avec de l'acide sulfurique et conduit à des solutions contenant essentiellement du sulfate de zinc (environ 100 g/l), du germanium (IV) (0,1-1 g/l) et d'autres éléments comme le cadmium, le magnésium, etc. Comme ces métaux n'interfèrent pas avec l'électrolyse du zinc ou sont facilement éliminés, une séparation sélective du germanium des solutions acides serait particulièrement avantageuse pour l'isolation de ce métal.

Des procédés conventionnels pour la séparation du germanium des solutions acides de lixiviation (précipitation avec du tannin, distillation du tétrachlorure de germanium, etc.) sont très compliqués. Par suite, l'extraction liquide-liquide et les néthodes de séparation par résine apparaissent particulièrement attrayantes et ont été très largement étudiées. De nombreux solvants tels que le tétrachlorure de carbone, le chloroforme et le phosphate de tributyle, et des extractants tels que les amines à longue chaîne, des acides alcoyl phosphoriques, des acides phosphiniques, l'oxine, des acides hydroxamiques et l'alcoylpyrocatechol ainsi que de nombreuses résines ont été proposés. Toutefois, la faible capacité de la majorité des résines et des extractants, leurs coûts prohibitifs et les conditions sévères de séparation qu'elles impliquent parfois ont souvent limité leur application. Les $\alpha$-hydroxyamines, récemment introduits, apparaissaient jusqu'à récemment comme les réactifs les plus adaptés pour l'extraction à l'échelle industrielle du germanium. Leur application à l'échelle industrielle a été étudiée et des experiences à l'échelle pilote ont été menées à bien ; cela est décrit dans l'article de De Schepper, A. Hydrometallurgy, 1 (1976) 291. Quoiqu'étant particulièrement intéressant, ces composés citent toujours des conditions très strictes (par exemple haute acidité de la solution aqueuse et forte concentration en extractant) pour être efficaces.

Par ailleurs, une partie des auteurs de la présente invention ont publié deux articles, dans Hydrometallurgy, vol. 5, n° 2, 3, février 1980, Amsterdam, NL, pages 149 - 160 et dans J. Inorg. Nuclchem., vol. 41, 1979, Pergamon Press Ltd, GB, pages 1353 - 1363. Ces articles montraient qu'il était possible d'extraire en phase liquide-liquide le germanium sélectivement vis-à-vis de certains métaux en milieu sulfurique. Toutefois, ces articles montraient que la récupération du germanium était extrèmement longue à partir de la phase organique. Il était nécessaire de combiner une réextraction sans agitation et une réextraction avec agitation pendant une durée voisine de quatre heures, ce qui rendait cette technique extrèmement peu attractive.

C'est la raison pour laquelle un des buts de la présente invention est de fournir un procédé de récupération du germanium au moyen d'une extraction utilisant une phase stationnaire dont la substance active est un dérivé de l'oxine (hydroxy-8-quinoléine).

Un autre but de l'invention est de fournir un procédé pour l'extraction sélective du germanium de telles solutions contenant au moins un métal choisi parmi le cadmium, le zinc, le cobalt, le fer, l'arsenic, l'aluminium, le gallium, le cuivre et le nickel.

Un autre objet enfin de la présente invention est de séparer le germanium des solutions aqueuses contenant du zinc par un procédé de faible coût.

Selon la présente invention, un procédé pour l'extraction sélective du germanium d'une solution acide aqueuse contenant, outre le germanium, au moins un autre métal choisi dans le groupe constitué par le cadmium, le zinc, le cobalt, le fer, l'arsenic, l'aluminium, le gallium, le cuivre et le nickel, caractérisé par le fait qu'il comporte:

a) une extraction du germanium par mise en contact de ladite solution avec une phase stationnaire constituée par un dérivé de l'oxine ayant une chaîne hydrocarbonée comportant au moins 8 et au plus 16 atomes de carbone adsorbée sur support solide,

b) une élution du germanium de ladite phase stationnaire par mise en contact de ladite phase avec un milieu aqueux choisi dans le groupe constitué par les milieux alcalins dont le pH est supérieur à 13 et les solutions d'acides fluorhydrique et chlorhydrique.

Selon l'invention, la longue chaîne hydrocarbonée dudit extractant comporte au moins huit atomes de carbone et de préférence jusqu'à seize atomes de carbone, et a au moins une insaturation éthylénique. De préférence, ledit extractant est la $\beta$-dodécényl-hydroxy-8-quinoléine, mais d'autres positions de ladite chaîne sont dans le domaine de l'invention.

La résine imprégnée comporte avantageusement un composé polaire liposoluble en proportion pouvant atteindre 50 %.

Le pH de ladite solution aqueuse acide est avantageusement inférieur à 2, de préférence compris entre 0,5 et 1,5. Si ladite solution aqueuse n'est pas suffisamment acide, ladite solution est de préférence acidifiée, par exemple par addition d'acide sulfurique.

Ledit milieu aqueux utilisé dans l'étape d'élution est de préférence un milieu alcalin dont le pH est supérieur à 13.

Ledit milieu aqueux peut également être de l'acide fluorhydrique dilué (1 à 10 % de HF en poids) de préférence à raison de 2 à 5 % en poids.

Pendant l'étape d'extraction, la température est de préférence ambiante ou inférieure, mais la température peut atteindre 80°C sans que cela gêne, et, pendant l'opération d'élution, la température est de préférence ambiante ou supérieure.

D'autres objets et d'autres caractéristiques avantageuses de la présente invention seront apparents dans la suite de la description et des revendications.

Les conditions optimales autres que celles décrites ci-dessus ou ci-après sont celles déjà décrites dans l'article Hydrometallurgy, vol. 5, 1980, page 149 ou dans la demande de brevet dont la présente demande est une demande divisionnaire, à savoir la demande n 81.401313.2.

L'extraction par résine diffère de celle décrite ci-dessus et relative à l'extraction liquide-liquide sur les points suivants:

- Le meilleur domaine de pH pour l'extraction est de 0 à 2 et de préférence 0,5 à 1,5 (il est à noter qu'une moins grande acidité est demandée dans l'extraction liquide-liquide).

- La vitesse d'extraction est bien supérieure même sans agitation.

- La distribution de composés du type βoxH entre la phase organique et la phase aqueuse est bien meilleure lorsque la phase organique est une résine, environ 10 fois; en d'autres termes, la concentration en Kelex dans la phase aqueuse est plus faible, par exemple pour une concentration de 10 % en βoxH dans la phase organique les valeurs des rapports de concentration entre la phase organique et la phase aqueuse sont respectivement pour la phase organique liquide et pour la résine, à pH 1 $10^{-4}$ et $10^{-5}$, à pH 7 $10^{-6,5}$ et $10^{-7,5}$ et à pH 13 $10^{-6,2}$ et $10^{-6,8}$.

- L'influence des composés polaires liposolubles est la même que pour les extractions liquide-liquide mais il est possible d'atteindre une plus grande proportion en lesdits composés, jusqu'à 50 % au lieu de jusqu'à 20 %.

Les résines utilisées furent, d'une part, les résines produites par la méthode décrite par Bayer dans son brevet allemand DE-OS 2 162 951 et procurées par elle et, d'autre part, les résines produites par adsorption sur un squelette de résine inerte. La dernière méthode est déjà connue en elle-même et elle est rappelée dans l'exemple 2. Les résines obtenues suivant les deux cas donnent des résultats similaires.

Il a été trouvé que sans agitation il était possible d'extraire et d'éluer de la même manière que décrit pour l'extraction liquide-liquide le germanium présent dans des solutions de sulfate. L'élution par l'acide chlorhydrique (4 à 12 N, de préférence 6 à 10 N) dans le cas des résines est possible contrairement au cas des extractions liquide-liquide comme cela est indiqué dans les exemples.

Le comportement des extractants selon l'invention présente de grandes différences avec celui de l'hydroxy-8-quinoléine, dont le nom vulgaire est "oxine". Les applications de l'oxine pour les extractions liquide-liquide sont limitées en raison de sa haute solubilité dans des milieux acide et alcalin. En revanche, les extractants selon la présente invention ont des substituants hydrophobes qui remplacent un ou plusieurs H dans la molécule. De tels extractants ont une faible solubilité dans des solutions aqueuses acides et/ou alcalines et donnent des coefficients de distribution élevés. La β-dodécényl hydroxy-8-quinoléine (βoxH) est un dérivé intéressant de l'oxine parce que, parmi d'autres composés intéressants selon l'invention, il est accessible commercialement sous le nom de Kelex 100 de la société SCHEREX. La 7-2-éthyl-héxyl-hydroxyquinoléine, accessible commercialement sous le nom de Kelex 108 de la société SCHEREX, et la 7-undécyl-hydroxy-8-quinoléine se comportent comme l'extract ant βoxH.

**Exemple 1:** Extraction du germanium par résine

La résine utilisée est une résine produite par Bayer et contenant environ 300 grammes de βoxH par litre de résine (pas d'octanol). Les paramètres de l'exemple sont les suivants.

Le volume du lit est de 18 ml. Le débit est de 4,4 bv/h (bv = bed volume, c'est-à-dire volume du lit). Le lavage est réalisé avec de l'acide sulfurique 0,5 M. L'élution est réalisée avec de l'hydroxyde de sodium 3 N. Certains essais d'élution avec l'acide chlorhydrique ont été réalisés. Les résultats de ces essais sont réunis dans le tableau suivant.

| solution initiale Ge en g/l | H+ N | Ge fixé | | par NaOH 3N à 50°C* | Rende- ment % | Elution par HCL Ge mg | Rende- ment % |
|---|---|---|---|---|---|---|---|
| | | Nombre de bv | mg | | | | |
| 1,00 | 3 | 17 | 122,50 | froid 27,5 | 22,4 | | |
| | | | | 50°C 60,0 | 43,0 | | |
| 1,30 | 3 | 11 | 85,00 | 30,0 | 35,3 | 5N 48,75 | 57,5 |
| 1,15 | 3 | 14 | 72,00 | 68,0 | 94,5 | | |
| 0,119 | 0,42 | 70 | 37,50 | 40,0 | 98 | | |
| 0,119 | 1,4 | 40 | 48,20 | 51,7 | 98 | | |
| 0,119 | 1,4 | 44 | 50,00 | | | 8 N | 95 |
| 0,119 | 1,4 | 35 | 50,70 | 39,20 | 77,3 | traces HF 2 % | |

* sauf lorsque spécifié autrement

**Exemple 2:** Préparation de la resine

La résine est préparée selon le procédé décrit ci-après. Le matériau de départ est une résine polystyrénique macropore sans groupes fonctionnels, par exemple l'AMBERLITE XAD.7.

La résine est l'avée par de l'alcool à 95°, puis par de l'acide chlorhydrique 1 M et enfin par de l'eau jusqu'à complète élimination des ions chlorure. La résine est alors séchée à 110°C jusqu'à poids constant.

Une solution de βoxH est préparée d'une manière telle que le volume total de la solution soit suffisant pour recouvrir complètement la résine, que la concentration en βoxH corresponde au poids désiré, par exemple à 30 % du poids de la résine; ceci correspond en général à une concentration de 10 à 50 %. Le diluant est de préférence le n-heptane.

La résine et la solution sont mélangées et la suspension est soumise à un conditionnement sous vide pour éliminer les gaz contenus dans la résine et pour faciliter l'introduction de βoxH.

Le diluant, l'heptane, est évaporé. Une nouvelle quantité d'heptane est ajoutée et à nouveau évaporée. La résine obtenue est soumise à une température de 110°C pendant une nuit. La résine ainsi obtenue est mise en contact avec une solution acide et est prête pour usage; elle donne des résultats similaires à celui de la résine fournie par Bayer.

Selon la même préparation, il est possible de produire un mélange de Kelex et de composés liposolubles polaires.

Evidemment, l'invention n'est pas limitée au traitement des solutions de lixiviation. Par exemple, une autre application spécifique est l'extraction du germanium du speiss, puisque ladite extraction est sélective du germanium vis-à-vis du fer et de l'arsenic.

**Revendications**

1. Procédé pour l'extraction sélective du germanium d'une solution acide aqueuse contenant, outre le germanium, au moins un autre métal choisi dans le groupe constitué par le cadmium, le zinc, le cobalt, le fer, l'arsenic, l'aluminium, le gallium, le cuivre et le nickel, caractérisé par le fait qu'il comporte:

a) une extraction du germanium par mise en contact de ladite solution avec une phase stationnaire constituée par un dérivé de l'oxine ayant une chaîne hydrocarbonée comportant au moins 8 et au plus 16 atomes de carbone adsorbée sur support solide,

b) une élution du germanium de ladite phase stationnaire par mise en contact de ladite phase avec un milieu aqueux choisi dans le groupe constitué par les milieux alcalins dont le pH est supérieur à 13 et les solutions d'acides fluorhydrique et chlorhydrique.

2. Procédé selon la revendication 1, caractérisé par le fait que le pH de ladite solution aqueuse acide est ajusté à une valeur comprise entre 0 et 2.

3. Procédé selon la revendication 2, caractérisé par le fait que le pH est ajusté à une valeur comprise entre 0,5 et 1,5.

4. Procédé selon les revendications 1 à 3 prises séparément, caractérisé par le fait que ladite phase stationnaire est constituée par un mélange d'un dérivé de l'oxine et d'un composé polaire liposoluble, ce dernier étant dans une proportion en volume inférieure à 50 %.

5. Procédé selon les revendications 1 à 4 prises séparément, caractérisé par le fait que la longue chaîne hydrocarbonée dudit extractant comporte au moins une insaturation éthylénique.

6. Procédé selon les revendications 1 à 5 prises séparément, caractérisé par le fait que ledit extractant est choisi donc le grolpe constitué par le 7-β-dodécényl-hydroxy-8-quinoléine, le 7-undécyl-hydroxy-8-quinoléine et le 7-2-éthyl-héxyl-hydroxy-8-quinoléine.

7. Procédé selon les revendications 1 à 6 prises séparément, caractérisé par le fait que la température du milieu aqueux et de la phase organique pendant l'étape d'élution est au moins égale à 40°C.

8. Procédé selon les revendications 1 à 7 prises séparément, caractérisé par le fait que l'élution est réalisée par de l'acide chlorhydrique dont normalité est comprise entre 4 et 12 N.

## Patentansprüche

1. Verfahren zur selektiven Extraktion von Germanium aus einer wäßrigen sauren Lösung, die außer Germanium noch mindestens ein anderes Metall, ausgewählt unter Cadmium, Zink, Kobalt, Eisen, Arsen, Aluminium, Gallium, Kupfer und Nickel, enthält,

<u>gekennzeichnet durch</u>

a) Extraktion des Germaniums durch Kontaktieren der Lösung mit einer auf einem festen Träger adsorbierten, stationären Phase eines Oxinderivats mit einer Kohlenwasserstoffkette mit mindestens 8 und höchstens 16 Kohlenstoffatomen und

b) Eluieren des Germaniums aus der stationären Phase durch Kontaktieren der Phase mit einem wäßrigen Medium, ausgewählt unter alkalischen Medien mit einem pH-Wert über 13 und Flußsäure- oder Salzsäurelösungen.

2. Verfahren nach Anspruch 1, dadurch gekennzeichnet, daß der pH-Wert der sauren wäßrigen Lösung auf einen Wert von 0 bis 2 eingestellt wird.

3. Verfahren nach Anspruch 2, dadurch gekennzeichnet, daß der pH-Wert auf von 0,5 bis 1,5 eingestellt wird.

4. Verfahren nach einem der Ansprüche 1 bis 3, dadurch gekennzeichnet, daß als stationäre Phase ein Gemisch eines Oxinderivats und einer polaren fettlöslichen verbindung verwendet wird, wobei letztere in einem volumenanteil unter 50 % vorliegt.

5. Verfahren nach einem der Ansprüche 1 bis 4, dadurch gekennzeichnet, daß ein Extraktionsmittel verwendet wird, dessen lange Kohlenwasserstoffkette mindestens eine ethylenisch-ungesättigte Bindung aufweist.

6. Verfahren nach einem der Ansprüche 1 bis 5, dadurch gekennzeichnet, daß das Extraktionsmittel unter 7-(β-Dodecenyl)-8-hydroxychinolin, 7-Undecyl-8-hydroxychinolin und 7-(2-Ethylhexyl)-8-hydroxychinolin gewählt wird.

7. Verfahren nach einem der Ansprüche 1 bis 6, dadurch gekennzeichnet, daß die Temperatur des wäßrigen Mediums und der organischen Phase während der Eluierstufe auf mindestens 40°C eingestellt wird.

8. Verfahren nach einem der Ansprüche 1 bis 7, dadurch gekennzeichnet, daß die Eluierung mit Salzsäure mit einer Normalität von 4 bis 12 n durchgeführt wird.

## Claims

1. Process for the selective extraction of germanium from an aqueous acid solution containing in addition to germanium at least one other metal selected from the group consisting of cadmium, zinc, cobalt, iron, arsenic, aluminium, gallium, copper, and nickel characterized by the fact it comprises:

a) extraction of germanium by placing the said solution in contact with a stationary phase comprising a derivative of oxine having a hydrocarbon chain of at least 8 and at most 16 carbon atoms adsorbed on a solid support ; and

b) elution of the germanium from said stationary phase by placing the said phase in contact with an aqueous medium selected in the group consisting in alkaline media whereof pH is higher than 13 and hydrofluoric and hydrochloric acid solution.

2. Process according to claim 1, characterized by the fact that the pH of said aqueous acid solution is adjusted to a value comprised between 0 and 2.

3. Process according to claim 2, characterized by the fact that the pH is adjusted to a value comprised between 0.5 and 1.5.

4. Process according to claim 1 to 3 taken separately, characterized the fact that said stationary phase comprise a mixture of a derivative of oxine and of a liposoluble polar compounds the latter being in a volume proportion lower than 50 %.

5. Process according to claim 1 to 4 taken separately, characterized by the fact that the long hydrocarbon chain of the said extractant exhibits ethylenic unsaturation.

6. Process according to claim 1 to 5 taken separately, characterized by the fact that said extracting agent is selected in the group consisting of the 7-dodecenyl-8-hydroxy-quinoline, 7-undecyl-8-hydroxy-quinoline and 7-2-ethylhexyl-8-hydroxy-quinoline.

7. Process according to claim 1 to 6 taken separately, characterized by the fact that the temperature of the aqueous medium and of the organic phase during the elution step is at least equal to 40°C.

8. Process according to claim 1 to 7 taken separately, characterized by the fact that the elution is realized by hydrochloric acid whereof normallity is comprised between 4 and 12 N.

6